Europäisches Patentamt

European Patent Office

Office européen des brevets

(11) Publication number: **0 232 682 B1**

# EUROPEAN PATENT SPECIFICATION

(45) Date of publication of patent specification: **21.08.91**  (51) Int. Cl.⁵: **E01H 13/00, F24H 3/04**

(21) Application number: **86830045.0**

(22) Date of filing: **21.02.86**

(54) **A device for the mixing and diffusion of warm and cold air, for dissolving the fog.**

(30) Priority: **13.02.86 IT 4765486**

(43) Date of publication of application:
**19.08.87 Bulletin 87/34**

(45) Publication of the grant of the patent:
**21.08.91 Bulletin 91/34**

(84) Designated Contracting States:
**AT BE CH DE FR GB LI NL SE**

(56) References cited:
**EP-A- 0 233 160**    **BE-A- 695 798**
**CA-A- 1 084 405**    **DE-A- 2 251 045**
**DE-A- 3 236 343**    **FR-A- 1 305 565**
**US-A- 2 985 438**

**Amélioration de la visibilité par temps de brouillard sur les pistes et à leur voisinage - Recherches effectuées par l'Aéroport de Paris de 1958 à 1966 (Résumé) - Mai 1966**

(73) Proprietor: **Cecconi, Angelo**
**Via Degas, 21**
**I-00133 Roma(IT)**

(72) Inventor: **Cecconi, Angelo**
**Via Degas, 21**
**I-00133 Roma(IT)**

(74) Representative: **Fiammenghi-Domenighetti, Delfina et al**
**Fiammenghi-Fiammenghi Via Quattro Fontane 31**
**I-00184 Roma(IT)**

## Description

The present invention concerns a device for dissolving the fog consisting of a diffusor that determines the mixing of warm and cold air.

It is known that the fog mainly consists of a water meteor that is formed in conditions of low temperature and high moisture, such as to cause the condensation of the vapour in the superficial layers.

It is also known that the presence of fog on large areas, like airports, stadia, ports, motorways and the like represents an extremely relevant trouble and danger.

Actually, devices are known that free a throw consisting of an enormous quantity of warm air so as to violently hit the fog-bank with the purpose of dissolving the same.

Said devices have proved, until now, to be inadequate for the solution of the problem, as they have an evident and excessive energy consumption and, furthermore, determine the formation of whirls that fly about and move to adjacent areas, only creating a great turbulence, without improving the visibility.

More in particular patents for dispersing fog from limited areas, such as landing strips for aircraft are already known.

DE-A-2 251 045, for instance, provides to mount along the longitudinal edges of a landing strip, devices capable of suctioning foggy air from said landing strip and to discharge said air outwards laterally.

BE-A-695 798 proposes a solution to the fog problems, by the use of a method for creating a screen for the fog on a landing strip for aircraft, like to a saddle roof comprising two opposite inclined screening walls obtained by two pluralities of primary jets of pressurized air, while other two pluralities of additional jets are directed upwards and contain purified air with an optional addition of antifreeze solution and are discharged in the space underneath said inclined air screening walls.

Also known is French Patent FR-A-1 305 565 in which provision is made for eliminating the fog from the landing strip for aircraft by raising the temperature near said landing strip by means of burners. This method provides the use of burner units installed in lines parallel to the runways or landing strips, and mounted at a distance less than 150 meters from the center line thereof, i.e. within those areas, which, in accordance with OACI standards, should be free of any obstruction projecting above the ground, so that only stationary "buried" jet-discharge units can be used, which are very expensive to be realized and which occupy large spaces. Furthermore by this method turbo-jets for the fog dispersal are used which have high temperatures and speeds, thus causing dangerous turbulence effects. This method also cannot take into consideration the variable directions of the winds.

Also known is a document "Amélioration de la visibilité par temps de brouillard sur les pistes et à leur voisinage: Recherches effectuées par l'Aéroport de Paris de 1958 à 1966", published May 1966, which discloses a method for dissolving fog on large open areas using hot air generators installed above the ground. Each generator has a fire box, in which hot gases are produced through fuel combustion, and a discharge duct, where the hot gases are mixed with cold air blasted by a helical fan.

The air mixture is then discharged horizontally. However, no means are provided for adjusting the air jets and the mixture composition and no details are given on the configuration and construction of such generators. From the Canadian patent CA-A-1 084 405 issued August 26, 1980 is known an apparatus for burning gaseous fuels, such as natural gas and propane, with a minimum emission of noxious gases. The apparatus comprises two coaxial tubular casings and an electric motor having a blower fan blade and a swirler blade mounted on its shaft. The blower fan blade provides an air flow through the outer casing. A portion of air is directed into the inner casing by the inducement of the swirler blade rotating within the inner casing. The inner casing, downstream the swirler blade, has the function of a combustion chamber. Fuel is fed to the combustion chamber and swirled and mixed with air passing through the chamber for an efficient combustion of the fuel. Combustion products and residual fuel and air are discharged from the combustion chamber. However, this apparatus is able to generate only a weak, non-adjustable air jet and cannot be used as a fog dissolving apparatus.

It is the aim of the present invention to provide a device for dissolving fog on large open areas which has a low energy consumption and a high efficiency, is adapted to generate a jet of accurately mixed cold and warm air and can be easily installed on the area to be treated. The aim set forth is reached according to the present invention by a device for dissolving fog on large areas, such as landing strips for aircraft, stadia, harbours, highways and the like, as is characterized in the attached claim.

The present invention will be explained in detail hereinbelow in connection with a preferred embodiment, as shown, in the attached drawing, wherein:

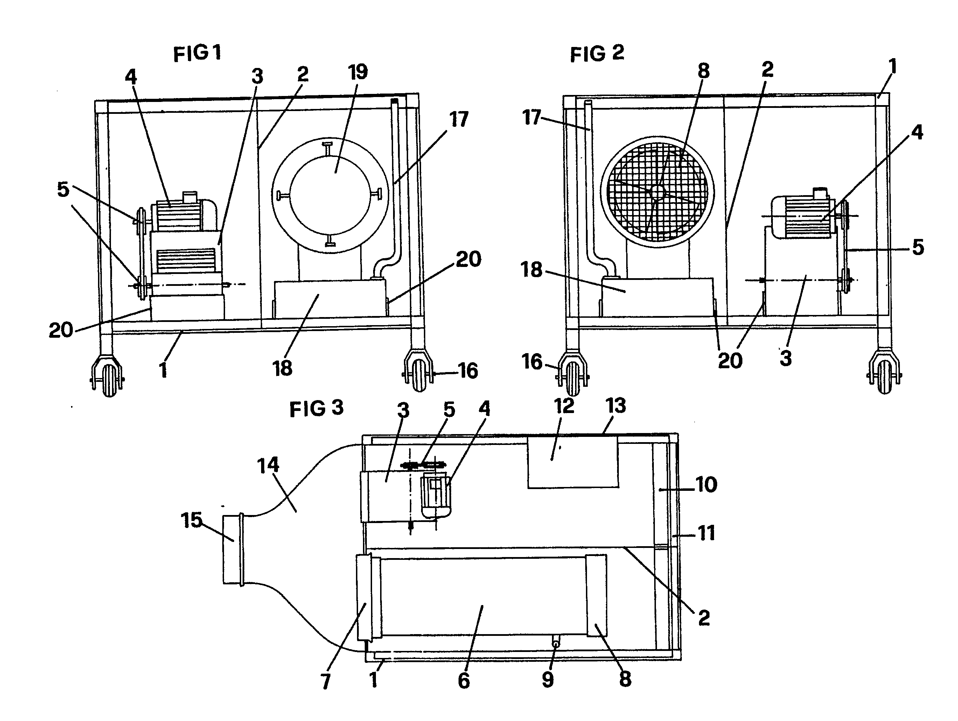

Figures 1 and 2 show a front and back section view, respectively;

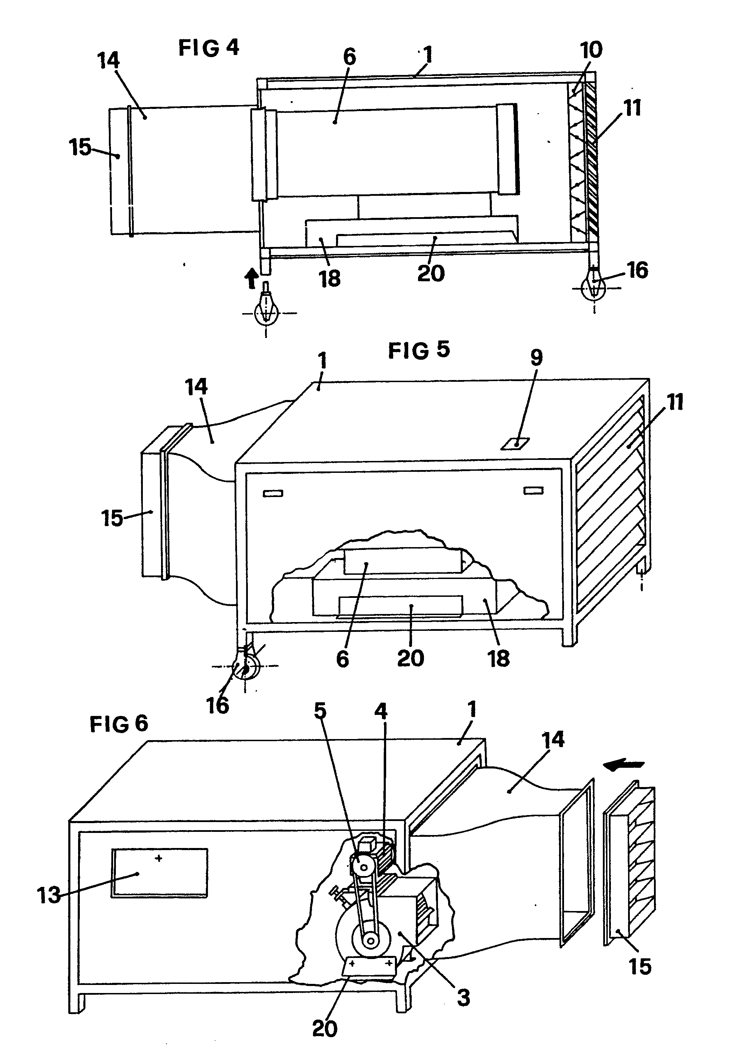

Figures 3 and 4 show a plan and a vertical section view, respectively;

Figures 5 and 6 show a back lateral and a front lateral perspective view, respectively, with portions broken away to show internal components.

The present invention concerns a device for the mixing and diffusion of warm and cold air for dissolving the fog, comprising an electro-ventilator 3 and a warm air generator 6 placed in a metal casing 1, consisting of an inox steel strong structure , provided with wheels 16 (the front ones being orientable) for an easy transport. The covering walls of the casing 1 are obtained by sealed panels, insulated with sound-absorbing materials, out of painted aluminium of great thickness and fixed to the frame by means of threaded plugs.

Said casing 1 is separated into two chambers by an internal wall 2, parallel to the longer side thereof, and placed at the centre so as to separate the air flow sucked by the warm air generator 6 from the air flow from the ventilation group 3. Since the ventilation group 3 is provided with a discharge head higher than the warm air generator 6, said division eliminates efficiency problems to generator 6.

For the external air intake of the two groups, a grid 11 of painted aluminium with fixed, downwardly inclined, tabs having an anti-rain profile is provided. A zinc-plated metal net prevents objects from entering the device.

For adjusting the air flow rates sucked from the two groups 6 and 3, two shutters 10 of contrast calibration of zinc-coated steel sheet with simple grooved tabs and with contrast movement are provided near to said grid 11 for the outward air intake.

In the upper panel a small door 9 for exposing the refuelling opening is provided.

By means of a flexible aluminium tube, a part of the air sucked by the ventilation group 3 is taken from the pushing opening of generator 6 for obtaining a working temperature of said ventilation group slightly higher than the external one, thus preventing an ice formation on the blades of the fan in case of very low temperature. A container 12 for a switch-and control-board, protected by a sealing cover 13, is mounted to one of the lateral walls within the casing 1.

The cold air ventilation group is formed by a centrifugal double suction fan 3 with screws having an aerodynamic profile, and impellers with a double central disk with frontwardly turned statically and dynamically balanced blades for a silent working, fitted on a shaft resting on permanent lubrication bearings.

Said fan 3 is fixed on a support 20 on the lower panel, or bottom wall, and its pushing mouthpiece projects from the front panel about 20 mm through an accurately finished opening in the same panel.

Said fan 3 is operated by an electric motor 4 placed on the same by means of a belt tension adjusting slide. The transmission of the motion is obtained by means of a trapezoidal belt 5 coupling a belt fan pulley having a fixed diameter and a motor pulley having a variable diameter so as to adjust the rotation speed of the fan 3 according to the requested statical pressure.

The warm air generator 6 is of the kind at direct combustion without a smoke relief tube, with a combustion chamber of inox steel, a mouthpiece 7, anti-backflash means and thermostatic capsule for the control of the temperature.

The air is pushed by a helicoidal electro-ventilator 8, placed at the back of generator 6.

The pushing mouthpiece 7 of generator 6 projects from the front panel, and the opening provided therein is 40 mm larger then the outlet mouthpiece 7 of the generator 6 and , at need, a circular anti-backflash tube of about 10 cm may be inserted between the opening in the panel and the pushing mouthpiece 7, also circular, the edge thereof being placed 5 cm inside the apparatus with an inclination of about 45°.

The mixing and diffusion of the warm air from generator 6 and cold air from ventilation group 3 are obtained into a hollow connection body 14 of inox steel sheet fixed in the front part of the apparatus. Said connection body 14 is aerodynamically tapered with rounded sliding edges for containing the charge loss of the ventilation groups and, at the same time, for providing an adequate throw. The direction of the air is obtained by a grid 15 with a series of horizontal and orientable tabs, placed in the end part of the mixer-connection.

The device is completed by a fuel reservoir 18 with a flame-spreading plate 19 and a filling up tube 17. Fan 3 and generator 6 are placed on supports 20.

## Claims

1. A device for dissolving fog on large open areas, such as landing strips for aircraft, stadia, harbours, highways and the like, characterized in that it comprises
   - a tubular horizontally extending casing (1), mounted on wheels (16), said casing being substancially rectangular in cross section, with longitudinal outer walls, a front wall and a back wall, said casing (1) comprising an inner longitudinal partition wall (2) separating the inner space thereof in first and second parallel adjacent chambers;
   - a motor fan group (3,4,5) fixedly mounted in said first chamber, comprising a support (20), a double suction fan (3) and a mouthpiece projecting from a first outlet orifice in the front wall, and producing a stream of cold air;

- a direct combustion warm air generator (6) mounted in said second chamber and comprising a mouthpiece (7) projecting from a second outlet orifice in the front wall and an electrically driven fan (8) arranged in the part of said generator (6) opposite to said mouthpiece (7);
- a hollow connection body (14), fixed to said casing (1) at said front wall, and aerodynamioally tapered so as to form, at the inside, a diffusion mixing chamber having a cross section which decreases from said front wall to a discharge orifice for discharging a mixture of the warm and the cold air stream substancially in a horizontal direction, guiding means being provided at said discharge orifice comprising a grid (15) with horizontal orientable tabs;
- a flexible aluminium tube connecting said warm air generator (6) to said motor fan group (3,4,5) so as to lead warm air from said generator (6) to said fan group (3,4,5);
- a container (12) inserted in said casing (1) housing an electric switch-board and provided with a sealing cover (13);
- a fuel reservoir (18) for feeding said direct combustion warm air generator (6), a flame-spreading plate (19) and a filling up tube (17) being provided;
- said motor fan group (3,4,5) and said warm air generator (6) being so arranged that the former has a discharge head higher than that of the latter, and
- said back wall comprising an opening with a net adapted to prevent rain and other foreign objects to enter said casing (1) and a grid structure (11), said grid structure (11) comprising a first and a second shutter control system for modulating air suction to said first and second chambers, respectively.

## Revendications

1. Dispositif pour dissiper le brouillard sur de grandes surfaces ouvertes telles que des terrains d'atterrissage pour avions, des stades, des ports, de grandes routes et analogue, caractérisé en ce qu'il comprend :
    - un carter tubulaire (1) s'étendant horizontalement, monté sur des roues (16), ledit carter présentant pratiquement en coupe transversale une forme rectangulaire, avec des parois extérieures longitudinales, une paroi avant et une paroi arrière, ledit carter (1) comprenant une paroi de séparation longitudinale interne (2) divisant son espace intérieur en une première et une seconde chambres parallèles adjacentes ;
    - un groupe de ventilation motorisé (3, 4, 5) fixé à l'intérieur de ladite première chambre, qui comprend un support (20), un ventilateur double aspirant (3) et une embouchure faisant saillie à partir d'un premier orifice de sortie ménagé dans la paroi avant et fournissant un courant d'air froid ;
    - un générateur d'air chaud (6) à combustion directe disposé à l'intérieur de ladite seconde chambre et qui comprend une embouchure (7) faisant saillie à partir d'un second orifice de sortie ménagé dans la paroi avant et un ventilateur à commande électrique (8) disposé dans la partie dudit générateur (6) opposée à ladite embouchure (7) ;
    - un corps de jonction creux (14), qui est fixé audit carter (1) à l'endroit de ladite paroi avant et qui présente une forme aérodynamique effilée pour constituer, à l'intérieur, une chambre de mélange et de diffusion dont la section transversale décroît de ladite paroi avant vers un orifice d'échappement assurant l'évacuation d'un mélange du courant d'air chaud et du courant d'air froid pratiquement en direction horizontale, des moyens de guidage étant prévus sur l'orifice d'échappement et comprenant une grille (15) pourvue de pattes horizontales orientables
    - un tube flexible en aluminium qui relie ledit générateur d'air chaud (6) audit groupe de ventilation motorisé (3,4,5) de façon à conduire l'air chaud dudit générateur (6) audit groupe de ventilation (3,4,5) ;
    - un coffret (12) disposé à l'intérieur dudit carter (1), dans lequel est logé un tableau de commutation électrique, et qui comporte un couvercle étanche (13)
    - un réservoir de combustible (18) pour alimenter ledit générateur d'air chaud à combustion directe (6), une plaque (19) de propagation de flamme et un tube de remplissage (17) étant prévus ;
    - ledit groupe de ventilation motorisé (3,4,5) et ledit générateur d'air chaud (6) étant disposés de façon que le premier présente une tête d'échappement située plus haut que celle du second ; et
    - ladite paroi arrière présentant une ouverture pourvue d'un filet, conçu pour empêcher la pluie et d'autres corps étrangers d'entrer à l'intérieur dudit carter (1),
et une structure de grille (11), ladite
structure de grille (11) comprenant un
premier et un second systèmes de commande de volet pour moduler l'aspiration
d'air à la première et à la seconde
chambres, respectivement.

**Patentansprüche**

1.  Eine Vorrichtung zum Auflösen von Nebel auf
    großen, freien Flächen, wie z.B. Landebahnen
    für Flugzeuge, Stadien, Häfen, Schnellstraßen
    und dergleichen, dadurch gekennzeichnet,
    -   daß sie ein auf Räder (16) montiertes,
        rohrförmiges, sich horizontal erstreckendes Gehäuse (1) umfaßt, welches im
        Querschnitt im wesentlichen rechteckig
        ist, mit längsgerichteten Außenwänden,
        einer Stirnwand und einer Rückwand,
        welches Gehäuse (1) eine innere, seinen
        Innenraum in parallele benachbarte erste
        und zweite Kammern trennende, längsgerichtete Trennwand (2) aufweist;
    -   daß sie eine Motorgebläsegruppe (3,4,5)
        umfaßt, welche in dieser ersten Kammer
        fix montiert ist, eine Halterung (20), ein
        Doppelsauggebläse (3) und ein von einer
        ersten Auslaßöffnung in der Stirnwand
        vorstehendes Mundstück aufweist und einen Kaltluftstrom erzeugt;
    -   daß sie einen Warmluftgenerator (6) mit
        direkter Verbrennung umfaßt, welcher in
        der zweiten Kammer montiert ist und ein
        von einer zweiten Auslaßöffnung in der
        Stirnwand vorstehendes Mundstück (7)
        und ein elektrisch angetriebenes, in dem
        dem Mundstück (7) entgegengesetzten
        Teil des Generators (6) angeordnetes
        Gebläse (8) aufweist;
    -   daß sie einen hohlen Verbindungskörper
        (14) umfaßt, welcher an der Stirnwand
        am Gehäuse (1) befestigt ist und sich
        aerodynamisch so verjüngt, daß er an
        der Innenseite eine Diffusionsmischkammer mit einem Querschnitt bildet, welcher von der Stirnwand zu einer Austrittsöffnung abnimmt, um eine Mischung aus
        dem warmen und kalten Luftstrom im
        wesentlichen in horizontaler Richtung
        auszugeben, wobei an der Austrittsöffnung ein Führungsmittel vorgesehen ist,
        welches ein Gitter (15) mit horizontal
        orientierbaren Klappen aufweist;
    -   daß sie einen flexiblen Aluminiums-
        chlauch umfaßt, welcher den Warmluft-

generator (6) mit der Motorgebläsegrup-
pe (3,4,5) verbindet, um Warmluft von
dem Generator (6) zur Gebläsegruppe
(3,4,5) zu leiten;
-   daß sie einen Behälter (12) umfaßt, welcher in das Gehäuse (1) eingesetzt ist,
    ein elektrisches Schaltbrett enthält und
    mit einem Verschlußdeckel (13) versehen
    ist;
-   daß sie einen Brennstoffbehälter (18)
    zum Speisen des Warmluftgenerators (6)
    mit direkter Verbrennung umfaßt, wobei
    eine Flammenausbreitplatte (19) und ein
    Nachfüllrohr (17) vorgesehen sind;
-   daß die Motorgebläsegruppe (3,4,5) und
    der Warmluftgenerator (6) so angeordnet
    sind, daß ersterer einen Austrittskopf höher als der von letzterem besitzt, und
-   daß die Rückwand eine Öffnung mit einem Netz, das geeignet ist Regen und
    andere Fremdobjekte am Eintritt ins Gebläse (1) zu hindern, und eine Gitterstruktur (11) umfaßt, wobei die Gitterstruktur (11) ein erstes und ein zweites
    Verschlußklappensteuersystem zum Abstimmen der Luftansaugung zur ersten
    bzw. zweiten Kammer aufweist.

FIG 2

FIG1

FIG 3

EP 0 232 682 B1

FIG 4

FIG 5

FIG 6

7